(19) Europäisches Patentamt

European Patent Office

Office européen des brevets

(11) **EP 0 770 847 A2**

(12) **EUROPÄISCHE PATENTANMELDUNG**

(43) Veröffentlichungstag:
02.05.1997 Patentblatt 1997/18

(51) Int. Cl.⁶: **G01B 7/34**

(21) Anmeldenummer: 96116222.9

(22) Anmeldetag: 10.10.1996

(84) Benannte Vertragsstaaten:
**AT CH DE FR GB IT LI**

(30) Priorität: **27.10.1995 DE 19540062**

(71) Anmelder: **FORSCHUNGSZENTRUM JÜLICH GMBH**
**52425 Jülich (DE)**

(72) Erfinder:
• **Teske, Martin**
**52355 Düren (DE)**
• **Hürttlen, Werner**
**52428 Jülich (DE)**

(54) **Verfahren und Vorrichtung zur Abstandsmessung zwischen einer Messsonde und einer Messoberfläche**

(57)     Die Erfindung betrifft eine Vorrichtung zur Messung von Abständen und zwar insbesondere ein Rastertunnelmikroskop sowie ein zugehöriges Meßverfahren. Die Vorrichtung weist eine Meßsonde (6) und eine Probenhalterung für eine Probe (5) auf. Die Meßsonde (6) ist relativ zur Oberfläche einer in der Halterung befindlichen Probe in einer xy-Ebene zweidimensional bewegbar. Die Meßsonde wird durch entsprechende Mittel während der Relativbewegung zunächst vertikal zur zweidimensionalen Relativbewegung gemäß eines Korrekturwertes $\Delta z(x,y)$ verfahren. $\Delta z(x,y)$ ist die durch Schieflage der xy-Ebene zur Probenoberfläche bedingte Abstandsveränderung. Eine Reglereinrichtung (7) ist vorgesehen, mittels der die Meßsonde anschließend derart vertikal zur zweidimensionalen Relativbewegung verfahren wird, daß der Abstand zwischen Sonde und Oberfläche der Probe an den Meßorten konstant ist. Ferner sind Mittel (8) vorhanden, die das Reglersignal zur Erreichung des konstanten Abstandes als Maß für den zu messenden Abstand ermitteln.

     Erfindungsgemäß können aufwendige Reglereinrichtung vermieden werden, da nur noch mikroskopisch kleine Abstandsveränderungen mittels Regler ausgeglichen werden müssen

Figur 1

Printed by Rank Xerox (UK) Business Services
2.14.3/3.4

**Beschreibung**

Die Erfindung bezieht sich auf ein Verfahren und eine Vorrichtung zur Messung von Abständen zwischen einer Meßsonde und einer Probenoberfläche. Die Meßsonde wird relativ zur Probenoberfläche in einer xy-Ebene zweidimensional bewegt. Während dieser Relativbewegung werden Abstände zwischen der xy-Ebene und der Probenoberfläche ermittelt. x, y und z bezeichnen dabei die Richtungen eines xyz-Koordinatensystems, welches zueinander orthogonale Koordinatenachsen aufweist.

Ein Meßverfahren sowie eine Vorrichtung der vorgenannten Art sind aus der deutschen Anmeldung Aktenzeichen P 4432304.2-42 bekannt. Die Probe befindet sich so in einem Rastertunnelmikroskop, daß die zu vermessende Oberfläche parallel zu der mit xy-Ebene bezeichneten Ebene liegt. Die Meßsonde wird rasterförmig relativ zur Oberfläche der Probe zweidimensional bewegt. Dabei wird die Meßsonde mittels einer Reglereinrichtung derart in z-Richtung, also senkrecht zur xy-Ebene verfahren, daß der Abstand zwischen Sonde und Oberfläche der Probe an den Meßorten konstant ist. Die Strecke z(x, y), die die Meßsonde entlang der z-Richtung verfahren worden ist, stellt ein Abstandsmaß dar. Die ortsabhängig ermittelten z-Werte werden, soweit es sich um analoge Werte handelt, zwecks Verarbeitung, z. B. zwecks elektronischer Speicherung oder Bildverarbeitung, digitalisiert.

Es gelingt im allgemeinen nicht, die Oberfläche der Probe hundertprozentig parallel zur xy-Ebene zu justieren, d. h. die Probe ist immer in irgendeiner Richtung schief eingespannt. Ein an einem Ort (x,y) aufgenommener Meßwert des Abstandes von der xy-Ebene zur Oberfläche der Probe setzt sich somit aus dem durch die Schieflage bedingten sowie aus dem durch Unebenheiten der Probenoberfläche bedingten Abstand zusammen.

Abstandsänderungen aufgrund mangelnder paralleler Ausrichtung zwischen Bewegungsebene und Probenoberfläche sind regelmäßig sehr viel größer als Abstandsänderungen, die auf Unebenheiten der Probenoberfläche zurückzuführen sind. Somit setzt sich der Abstand aus einem „makroskopisch" großen sowie einem „mikroskopische" kleinen Anteil zusammen.

Die vorbeschriebene Vorrichtung erfordert folglich eine Reglereinrichtung, die sowohl makroskopische als auch mikroskopische Abstandsveränderungen zu kompensieren vermag. Diese ist nachteilhaft verhältnismäßig aufwendig und entsprechend teuer.

Mit der Digitalisierung der zumeist analog gemessenen Werte z(x,y) geht ferner ein Verlust an Information einher. Soll der z-Wert mit einer Wortlänge von acht Bit gemessen werden, so stehen nur 256 Unterteilungsmöglichkeiten zur Auflösung des z-Wertes zur Verfügung.

Aus EP 0 487 300 A1 ist ein weiteres Rastertunnelmikroskop bekannt. Die Reglereinrichtung weist zwei Komponenten auf. Die eine Komponente reagiert auf makroskopische, die andere Komponente auf mikroskopische Abstandsveränderungen zwischen Meßsonde und Probenoberfläche, die infolge der Relativbewegung auftreten. Das Reglersignal, das für den Ausgleich mikroskopischer Abstandsveränderungen benötigt wird, dient gleichzeitig als Maß für mikroskopische Abstandsveränderungen. Diese erlauben Rückschlüsse über die Topologie der Probenoberfläche.

Diese bekannte Vorrichtung verdeutlicht, daß gemäß Stand der Technik aufwendige Reglereinrichtungen eingesetzt werden, da hier zwei Komponenten benötigt werden.

Aufgabe der Erfindung ist die Schaffung eines Verfahrens sowie einer Vorrichtung, bei denen eine einfachere Reglereinrichtung im Vergleich zum vorgenannten Stand der Technik eingesetzt werden kann.

Die Aufgabe wird durch ein Verfahren mit den Merkmalen des Haupt- sowie mit einer Vorrichtung mit den Merkmalen des Nebenanspruchs gelöst. Vorteilhafte Ausgestaltungen ergeben sich aus den abhängigen Ansprüchen.

Verfahrensgemäß wird zunächst ein Korrektursignal $\Delta z(x,y)$ z. B. zur Regelreinrichtung addiert, so daß die Meßsonde entsprechend bewegt wird. Die Funktion $\Delta z(x,y)$ gibt dabei die Abweichung von der Parallelität zwischen der zweidimensionalen xy-Bewegungsebene und der Probenoberfläche wieder. Die Funktion kann z. B. vorab ermittelt werden. Verfahrensgemäß wird folglich zunächst die mit der Schieflage einhergehende Abstandsveränderung aufgrund des Korrektursignals kompensiert, ohne daß die Reglereinrichtung die Bewegung gesteuert hätte.

Die Reglereinrichtung regelt anschließend die Bewegung der Meßsonde in z-Richtung somit nur noch aufgrund von mikroskopischen Abstandsänderungen, die auf Oberflächenunebenheiten zurückzuführen sind.

Daher wird die Reglereinrichtung entlastet und kann entsprechend vereinfacht werden.

Wird nur das Abstandsmaß digitalisiert verarbeitet, welches auf das Reglersignal zur Erreichung des konstanten Abstandes zurückzuführen ist, so ist das Auflösungsvermögen im Vergleich zum eingangs genannten Stand der Technik sehr groß, da die zu digitalisierende Strecke mikroskopisch klein ist. Unter „digitalisierter Verarbeitung" ist z. B. zu verstehen, daß in digitalisierter Form gespeichert oder bildlich dargestellt wird.

Unabhängig hiervon kann vom jeweiligen Abstandswert z(x,y), der sich aus dem mikroskopischen und dem makroskopischer Anteil zusammensetzt, die am jeweiligen Meßort (x,y) die durch die Schieflage verursachte Abstandsvergrößerung $\Delta z(x,y)$ subtrahiert und nur das Substraktionsergebnis digitalisiert verarbeitet werden. Auf diese Weise kann ebenfalls ein gutes Auflösungsvermögen erreicht werden. Die „Abstandsvergrößerung" soll hier auf einen vorzugebenden Ausgangswert bezogen sein. Geeigneterweise handelt es sich dabei um den minimalen Abstand zwischen Ebene und Probenoberfläche.

Wird der Nullpunkt des Koordinatensystems bezüglich x und y an den Ort des minimalen Abstandes gelegt, so kann das Ergebnis der Subtraktion E(x, y) besonders schnell und einfach gemäß $E(x,y) = |z(x,y)| - \Delta z(x,y)$ mit $\Delta z(x,y) = |k_1| * x + |k_2| * y$ ermittelt werden, wobei $k_1$ bzw. $k_2$ die (durch Schieflage verursachten) Steigungen der xy-Ebene gegenüber der Probenoberfläche in x- bzw. y-Richtung darstellen.

Die Auflösung von z. B. 256 Unterteilungen bezieht sich infolge der Subtraktion nicht mehr auf den gesamten Abstand, sondern nur noch auf die verfahrensgemäß ermittelte Differenz. Somit ist das Auflösungsvermögen verbessert worden.

Der Einsatz einer digitalen Regelung hat bei einer weiteren Ausgestaltung der Erfindung den Vorteil, daß das Reglersignal bereits digitalisiert ist, daß also keine Analog-Digital-Umwandlung durchgeführt werden muß. Auf diese Weise kann beispielsweise bei einem Rastertunnelmikroskop ein Analog-Digital-Converter sowie ein Meßdatenaufbereitungsteil eingespart werden.

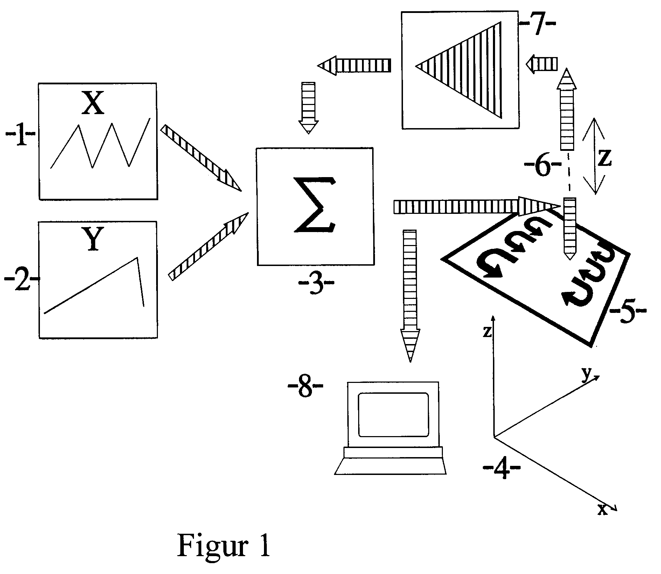

Fig. 1 bis 4 zeigen verschiedene Ausführungsformen der Erfindung.

Dargestellt ist ein X-Signalgeber 1, gemäß dem die Sonde 6 in x-Richtung sowie ein Y-Signalgeber 2, gemäß dem die Sonde 6 in y-Richtung bewegt wird. Die Korrekturschaltung 3 addiert in Abhängigkeit zur xy-Position ein $\Delta z$-Signal, gemäß dem die Meßsonde 6 in z- Richtung bewegt wird. Das $\Delta z$-Signal dient der Korrektur einer Schieflage zwischen xy-Bewegungsebene und Probenoberfläche 5. Mit x, y, z werden die Achsen des kartesischen Koordinatensystems 4 bezeichnet. Die Reglereinrichtung 7 dient der Einhaltung eines konstanten Abstandes zwischen Meßsonde 6 und Probenoberfläche 5, nachdem die Sonde gemäß Korrekturwert in z-Richtung bewegt worden ist. Zwecks Verarbeitung der Meßwerte werden diese einem Personal-Computer 8 oder einem vergleichbaren Gerät zugeführt.

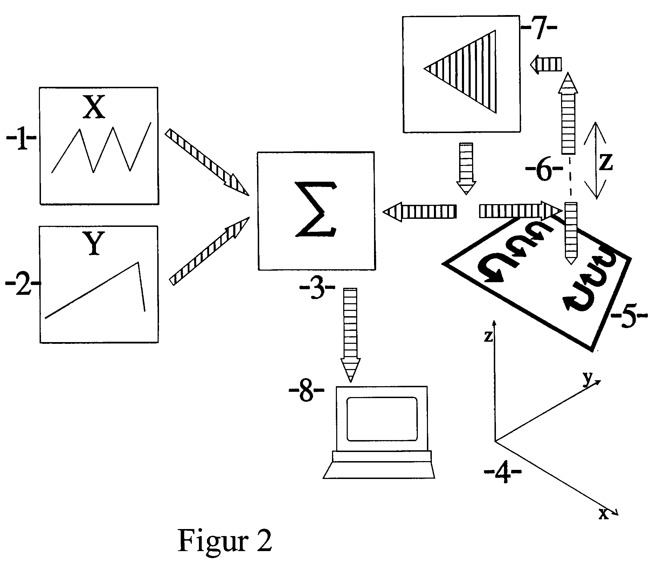

Probenoberfläche 5 befindet sich im Koordinatensystem 4 derart, daß Probenoberfläche und xy-Ebene nicht zueinander planparallel angeordnet sind. Die Oberfläche weist daher gegenüber der xy-Ebene eine Verkippung auf. Diese Verkippung wird ermittelt. Eine Meßsonde 6 wird zeilenweise über der Probenoberfläche verfahren und zwar in x- und y-Richtung zur Ausführung der Zeilenbewegungen und in z-Richtung zwecks Ausgleich der Ebenenverkippung gemäß einem Korrekturwert $\Delta z$. Das Verfahren der Sonde in z-Richtung gemäß dem Korrekturwert wird bewirkt, indem zu der jeweiligen xy-Koordinate der ermittelte Korrekturwert $\Delta z$ zum Ausgangssignal des Reglers 7 addiert wird. Auf diese Weise stellt sich dem Regler die Probenoberfläche so dar, als sei sie in der xy-Ebene liegend angeordnet. Der Regler regelt zusätzlich das Verfahren der Meßsonde in z-Richtung derart, daß die Sonde entsprechend der Probenoberflächentopographie verfahren wird. Diese z-Werte werden über einen ADC-Wandler geführt, welcher im Personalcomputer 8 befindlich ist, und sie werden dann als Bild dargestellt. Abweichend zur Figur 1 ist es auch möglich, gemäß Figur 2 die Addition der Korrekturwerte $\Delta z$ nur auf das Bildsignal anzuwenden. Die Verkippung der Probenebene zur xy-Ebene kann so kompensiert werden. Diese korrigierten z-Werte werden nun über einen ADC-Wandler geführt, welcher im Personalcomputer 8 befindlich ist, und werden dann als Bild dargestellt.

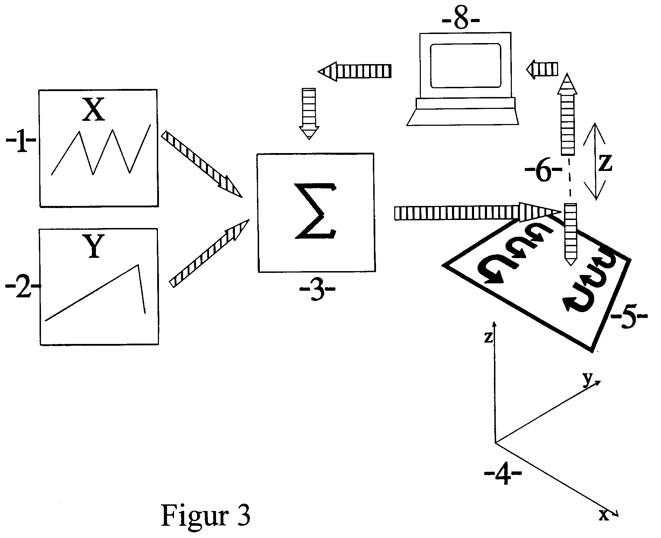

Wird die Regelung 7 gemäß Figur 3 durch einen digitalen Regler, z.B. eine DSP-Karte innerhalb eines Computers, ersetzt, so wird durch die Korrektur der Ebenenverkippung der notwendige Dynamikbereich des Reglers stark reduziert und die Realisierung des digitalen Reglers stark vereinfacht. Da der digitale Regler bereits einen ADC-Wandler besitzt, dessen Informationen um die Verkippung bereinigt sind, können diese Daten auch direkt als Bildsignal verwendet werden. Auf einen weiteren ADC-Wandler zur Digitalisierung der Bilddaten kann daher verzichtet werden.

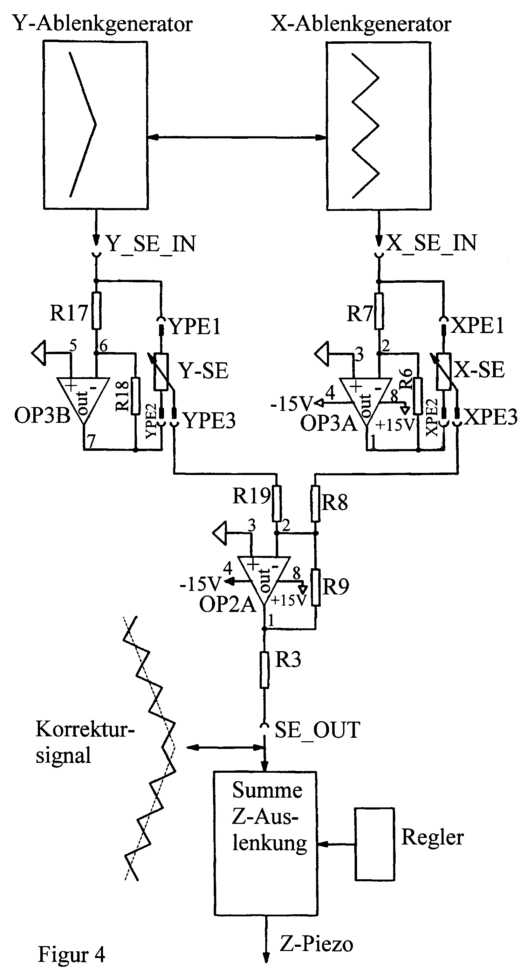

Figur 4 zeigt einen Schaltplan für eine Vorrichtung zur Durchführung des Verfahrens.

**Patentansprüche**

1. Verfahren zur Messung von Abständen mit den Schritten:

   a)eine Meßsonde wird relativ zur Oberfläche einer Probe in einer xy-Ebene zweidimensional bewegt,
   b)die Meßsonde wird während der Relativbewegung zunächst vertikal zur zweidimensionalen Relativbewegung gemäß eines Korrekturwertes $\Delta z(x,y)$ verfahren, wobei $\Delta z(x,y)$ die durch Schieflage der xy-Ebene zur Probenoberfläche bedingte Abstandsveränderung ist,
   c)anschließend wird die Meßsonde mittels einer Reglereinrichtung derart vertikal zur zweidimensionalen Relativbewegung verfahren, daß der Abstand zwischen Sonde und Oberfläche der Probe an den Meßorten konstant ist.
   d)das Reglersignal zur Erreichung des konstanten Abstandes wird als Maß für den zu messenden Abstand ermittelt.

2. Verfahren nach vorhergehendem Anspruch, bei dem das Maß für den zu messenden Abstand digitalisiert verarbeitet wird.

3. Verfahren nach einem der vorhergehenden Ansprüche, bei dem eine digitale Reglereinrichtung zur Erreichung des konstanten Abstandes eingesetzt wird.

4. Verfahren nach einem der vorhergehenden Ansprüche, mit einer rasterförmigen Relativbewegung.

5. Vorrichtung zur Messung von Abständen mit einer Meßsonde (6) und einer Probenhalterung für eine Probe (5), bei der die Meßsonde (6) relativ zur Oberfläche einer in der Halterung befindlichen Probe in einer xy-Ebene zweidimensional bewegbar ist, mit

a) Mitteln, die die Meßsonde während der Relativbewegung zunächst vertikal zur zweidimensionalen Relativbewegung gemäß eines Korrekturwertes $\Delta z(x,y)$ verfahren, wobei $\Delta z(x,y)$ die durch Schieflage der xy-Ebene zur Probenoberfläche bedingte Abstandsveränderung ist,

b) einer Reglereinrichtung (7), mittels der die Meßsonde anschließend derart vertikal zur zweidimensionalen Relativbewegung verfahren wird, daß der Abstand zwischen Sonde und Oberfläche der Probe an den Meßorten konstant ist,

c) mit Mitteln (8), die das Reglersignal zur Erreichung des konstanten Abstandes als Maß für den zu messenden Abstand ermitteln.

6. Vorrichtung nach vorhergendem Anspruch, bei der eine digitale Reglereinrichtung eingesetzt wird.

Figur 1

Figur 2

Figur 3

Figur 4